(19) Europäisches Patentamt / European Patent Office / Office européen des brevets

(11) **EP 4 050 203 B1**

(12) **EUROPEAN PATENT SPECIFICATION**

(45) Date of publication and mention
of the grant of the patent:
**03.01.2024 Bulletin 2024/01**

(21) Application number: **20878613.7**

(22) Date of filing: **26.05.2020**

(51) International Patent Classification (IPC):
**F03D 7/00** *(2006.01)*　　　**F03D 7/02** *(2006.01)*
**F03D 7/04** *(2006.01)*

(52) Cooperative Patent Classification (CPC):
**F03D 7/0224; F03D 7/024; F03D 17/00;**
F05B 2270/17; F05B 2270/33; Y02E 10/72

(86) International application number:
**PCT/CN2020/092333**

(87) International publication number:
**WO 2021/077734 (29.04.2021 Gazette 2021/17)**

(54) **PITCH CONTROL METHOD AND APPARATUS BASED ON CLEARANCE OF WIND TURBINE**

VERFAHREN UND VORRICHTUNG ZUR NEIGUNGSSTEUERUNG BASIEREND AUF DEM SPIEL EINER WINDTURBINE

PROCÉDÉ ET APPAREIL DE COMMANDE DE PAS BASÉS SUR LE JEU D'UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2019 CN 201911023169**

(43) Date of publication of application:
**31.08.2022 Bulletin 2022/35**

(73) Proprietor: **Beijing Goldwind Science & Creation
Windpower Equipment Co. Ltd.
Beijing 100176 (CN)**

(72) Inventors:
• **YANG, Juanxia**
  **Beijing 100176 (CN)**
• **LI, Yongming**
  **Beijing 100176 (CN)**
• **ZHAO, Shuchun**
  **Beijing 100176 (CN)**

(74) Representative: **advotec.
Patent- und Rechtsanwaltspartnerschaft
Tappe mbB
Widenmayerstraße 4
80538 München (DE)**

(56) References cited:
EP-A2- 2 690 285　　　EP-B1- 2 726 735
CN-A- 103 890 383　　　CN-A- 106 704 104
CN-U- 203 939 626　　　US-A1- 2013 045 098
US-A1- 2014 294 584

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The present disclosure generally relates to the technical field of wind power generation, and more particularly, to a pitch control method and device based on a clearance of a wind turbine.

**BACKGROUND**

Clearance is a key design indicator in the development of a wind turbine, especially with the development of large rotors and lightweight glass fiber blades, blades become quite soft, and the clearance is facing quite a severe challenge.

At present, an intelligent sensing technology has been applied in the clearance monitoring. By detecting the clearance in real time and timely activating a protection measure in case of risk, the clearance is improved to a certain extent and the safety of a unit is improved. An existing protection scheme based on measurement of the clearance is to protect a next blade through pitch control on a single blade according to the clearance measurement of a current blade, so as to prevent the next blade from "sweeping the tower". However, the pitch control scheme for a single blade has the risk of rotor imbalance, and the existing pitch control scheme for a single blade is open-loop, which does not form a closed-loop feedback protection based on the clearance.

US 2014/ 0 294 584 A1 discloses a method of operating a wind turbine. In the method, the instantaneous representative wind speed and the distance between the tower and one of the blades are determined. A tower distance pitch adjustment is determined based on the determined distance, and the one or more pitch systems applies the determined tower distance pitch adjustment to at least a next blade to be in the shadow of the tower.

EP 2 726 735 B1 discloses a method for controlling a wind turbine, in particular a method for controlling pitch of one or more blades of a wind turbine and related system. The method comprises collecting first data indicative of a dynamic condition of the first wind turbine blade and the rotor, the first data comprising rotor data and first deflection data, the rotor data being indicative of the azimuth position and rotational velocity of the rotor in a rotor plane perpendicular to the rotor axis, and the first deflection data being indicative of the position, speed and acceleration of one or more parts of the first wind turbine blade. Further, the method comprises calculating an expected tower clearance distance at a later time of tower passage for the first wind turbine blade based on the first data including acceleration of one or more parts of the first wind turbine blade, and performing measures to prevent tower collision, if the expected tower clearance distance fulfills a collision risk criterion.

**SUMMARY**

An object of an embodiment of the present disclosure is to provide a pitch control method and device based on a clearance of a wind turbine, so as to overcome at least one of the above disadvantages. The invention is set out in the appended set of claims.

**BRIEF DESCRIPTION OF THE DRAWINGS**

FIG. 1 is a flowchart of a pitch control method based on a clearance of a wind turbine according to an embodiment of the present disclosure;

FIG. 2 is a schematic view of a clearance monitoring system according to an embodiment of the present disclosure;

FIGS. 3A to 3C are schematic views of measuring a rotor azimuth according to an embodiment of the present disclosure;

FIG. 4 is a flowchart of steps of dynamically adjusting an additional pitch angle value of each blade according to an embodiment of the present disclosure;

FIGS. 5A to 5D are schematic views showing control effects of the above pitch control method under an extreme wind shear working condition according to an embodiment of the present disclosure;

FIGS. 6A to 6E are schematic views showing control effects of the above pitch control method under a normal power generation working condition according to an embodiment of the present disclosure;

FIG. 7 is a block diagram of a pitch control device based on a clearance of a wind turbine according to an embodiment of the present disclosure;

FIG. 8 is a block diagram of a controller of a wind turbine according to an embodiment of the present disclosure; and

FIG. 9 is a block diagram of a control system of a wind turbine according to an embodiment of the present disclosure.

## DETAILED DESCRIPTION OF THE EMBODIMENTS

Different exemplary embodiments will be described fully with reference to the drawings. Some embodiments are shown in the drawings.

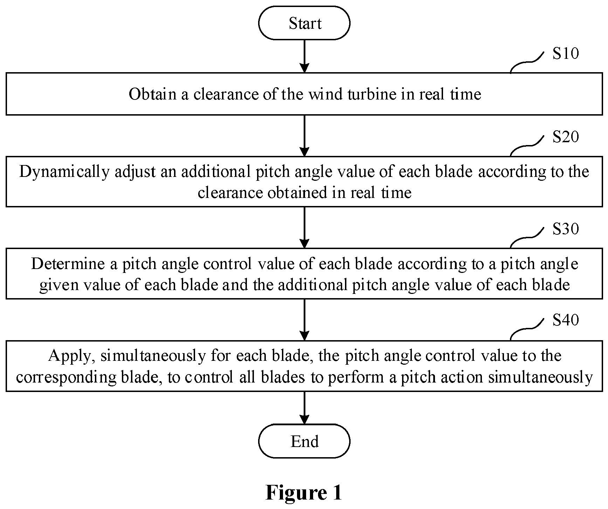

FIG. 1 is a flowchart of a pitch control method based on a clearance of a wind turbine according to an embodiment of the present disclosure.

Referring to FIG. 1, in step S10, a clearance of the wind turbine is obtained in real time. The wind turbine includes at least two blades. In some embodiments, the wind turbine may include three blades.

According to an embodiment of the present disclosure, the clearance refers to a distance from a blade tip to a tower surface during rotation of a rotor, and constraints for clearance are defined in the IEC standard:

$$(L_S - P_{CT}) * \gamma_M * \gamma_f < L_S \qquad (1)$$

In formula (1), $L_S$ is a static clearance, $\gamma_M$ is a material safety factor, $\gamma_f$ is a load safety factor, and $P_{CT}$ is a required value of a dynamic clearance.

Various existing detection devices may be used to detect the clearance of the wind turbine in real time, such that the clearance of the wind turbine can be obtained from the detection device in real time. For example, various detection devices may include a senor for measuring the clearance.

In some embodiments, before performing step S 10, the pitch control method based on the clearance of the wind turbine may further include: performing failure detection on the sensor. For example, it may be determined whether the sensor fails by detecting an available state of the sensor. The available state of the sensor may be determined based on a heartbeat signal of the sensor and an algorithm accuracy flag of the sensor. The sensor is considered to be not failed if it is determined that the sensor is in the available state currently, and the clearance of the wind turbine may be obtained from the sensor at this time. The sensor is considered to be failed if it is determined that the sensor is in an unavailable state currently, and at this time, data detected by the sensor is unusable, and a signal indicating the sensor fails is reported for timely maintenance.

In some embodiments, before performing failure detection on the sensor, it may be further determined whether a pitch control function based on the clearance is enabled. The failure detection is performed on the sensor if the pitch control function is in an enabled state. If the pitch control function is not in the enabled state, it is continuously determined whether the pitch control function based on the clearance is enabled. As an example, it may be determined whether the pitch control function is enabled by detecting an enable flag for indicating the pitch control function based on the clearance.

In some embodiments, before performing the step S 10, the pitch control method based on the clearance of the wind turbine may further include: determining a current rotor azimuth. The step S 10 is performed to obtain the clearance of the wind turbine if the rotor azimuth indicates that the blade is located within an effective azimuth range for measuring the clearance.

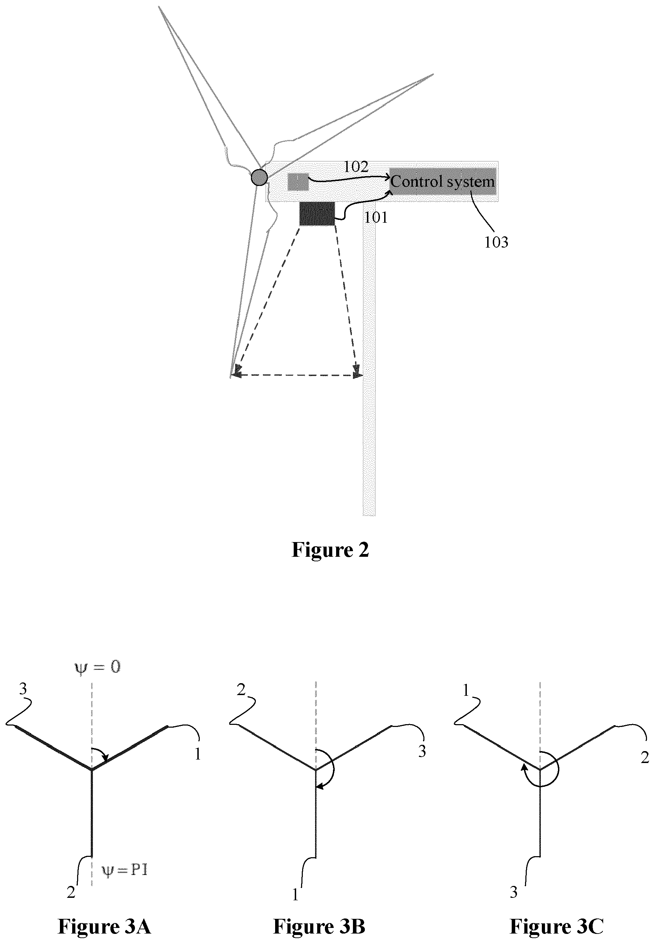

A method for detecting the clearance of the wind turbine is described with reference to FIG. 2. It should be understood that the method for detecting the clearance shown in FIG. 2 is merely an example. The present disclosure is not limited thereto, and other methods may also be used to detect the clearance.

FIG. 2 is a schematic view of a clearance monitoring system according to an embodiment of the present disclosure.

FIG. 2 is a schematic view showing an installation of the clearance monitoring system for detecting the clearance of the wind turbine. As shown in FIG. 2, 101 is a collection apparatus of the clearance monitoring system. The collection apparatus may be arranged at a bottom of a nacelle of the wind turbine, and the collection apparatus detects and calculates the clearance in real time when the blade rotates to the lowest point. 102 is an azimuth sensor for detecting the rotor azimuth. 103 is a control system of the wind turbine. The control system 103 obtains the clearance from the collection apparatus 101 in real time, and obtains the rotor azimuth from the azimuth sensor in real time, so as to perform pitch control.

As an example, a device with light weight, high precision (preferably, within 0.1m), high reliability, strong environmental adaptability, and high sampling frequency may be selected as the collection apparatus of the clearance monitoring system of the tower. The collection apparatus may obtain an image including the blades and the tower, and analyze the image to determine the clearance of the tower.

FIGS. 3A to 3C are schematic views of measuring the rotor azimuth according to an embodiment of the present disclosure.

As shown in FIGS. 3A to 3C, taking the wind turbine with three blades as an example, a first blade, a second blade and a third blade of the wind turbine are supposed to rotate in a clockwise direction. The rotor azimuth $\psi$ (rotor azimuth) records a position of the rotor. The rotor azimuth is 0 degree ($\psi$=0deg) when the first blade is vertically upward, and $\psi$=180deg when the first blade is at the lowest position.

As an example, in an embodiment of the present disclosure, effective azimuth ranges for measuring the clearance may be defined as $\left[\dfrac{PI}{3}-\delta, \dfrac{PI}{3}+\delta\right]$, $[PI-\delta,\ PI+\delta]$, and $\left[5\times\dfrac{PI}{3}-\delta, 5\times\dfrac{PI}{3}+\delta\right]$, respectively. Herein, $PI$=180deg, and $\delta$ is an angle range for outputting effective measured clearance. Different clearance detection methods may have different effective azimuth ranges for measuring the clearance.

Returning to FIG. 1, in step S20, an additional pitch angle value of each blade is dynamically adjusted according to the clearance obtained in real time.

In some embodiments, a correspondence between multiple clearance intervals and multiple adjustments of the additional pitch angle may be established in advance. In this case, a clearance interval corresponding to the clearance obtained in real time may be determined, and the additional pitch angle value of each blade may be dynamically adjusted based on the adjustment of the additional pitch angle corresponding to the clearance interval corresponding to the clearance.

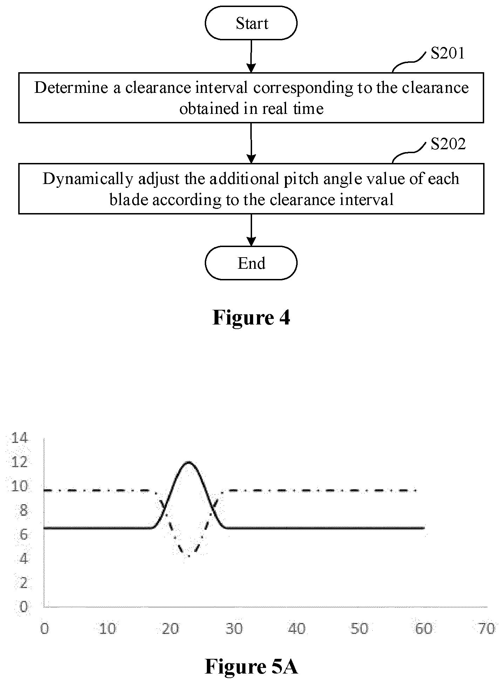

Steps of dynamically adjusting the additional pitch angle value of each blade will be described with reference to FIG. 4 hereinafter.

FIG. 4 is a flowchart of steps of dynamically adjusting the additional pitch angle value of each blade according to an embodiment of the present disclosure. It should be understood that the method of dynamically adjusting the additional pitch angle value of each blade shown in FIG. 4 is merely an example. The present disclosure is not limited thereto, and other methods may also be used to dynamically adjust the additional pitch angle value of each blade based on the clearance.

Referring to FIG. 4, in step S201, a clearance interval corresponding to the clearance obtained in real time is determined.

After the clearance of the wind turbine is obtained, it may be determined, based on preset clearance intervals, the obtained clearance belongs to which clearance interval of the preset clearance intervals.

In step S202, the additional pitch angle value of each blade is dynamically adjusted according to the determined clearance interval. If the determined clearance interval is a first clearance interval (that is, the clearance is less than a clearance safety threshold), a shutdown protection function for clearance over-limit is triggered and the wind turbine is controlled to shut down. If the determined clearance interval is a second clearance interval (that is, the clearance is greater than or equal to the clearance safety threshold), an additional pitch angle protection function is triggered and the additional pitch angle value of each blade is dynamically adjusted.

When the clearance interval corresponding to the clearance obtained in real time is the first clearance interval, it indicates that the wind turbine currently has a large risk of "sweeping the tower" and the wind turbine may be controlled to shut down at this time. For example, the wind turbine may be controlled to quickly shut down.

In other words, the clearance protection is realized by controlling the wind turbine to shut down in a case that the clearance obtained in real time is within the first clearance interval, and the clearance protection is realized by adjusting the additional pitch angle value in a case that the clearance obtained in real time is within the second clearance interval.

In some embodiments, after the additional pitch angle protection function is triggered, the additional pitch angle value is adjusted on a basis of an original pitch angle given value, to reduce an ability of the wind turbine in absorbing wind energy, such that the clearance increases. At the same time, the clearance is monitored in real time, and the additional pitch angle value is further dynamically adjusted based on the change of the clearance obtained in real time, to ensure that the clearance is within a safe range, thereby forming a closed-loop pitch control strategy based on the clearance.

The specific process of dynamically adjusting the additional pitch angle value of each blade after the additional pitch angle protection function is triggered will be described below.

When the clearance interval corresponding to the clearance obtained in real time is the second clearance interval, it indicates that the clearance of the wind turbine is smaller and needs to be intervened through pitch control. Therefore, the additional pitch angle value is gradually increased within a first preset time, to reach a preset additional angle value.

As an example, the process of gradually increasing the additional pitch angle value may refer to increasing the additional pitch angle value in each calculation period to reach the preset additional angle value. The above method of gradually increasing the additional pitch angle value can increase the additional pitch angle to the preset additional angle value within a short time. Herein, the preset additional angle value may refer to an additional pitch angle value that can keep the blade being within a safe clearance range, and the preset additional angle value may be determined based on the boost demand for the clearance and the responsiveness of a pitch actuator determined based on a current wind condition.

In some embodiments, the additional pitch angle value may be increased at a uniform speed in each calculation period. For example, taking the preset additional angle value of 2 degrees as an example, the additional pitch angle value may be increased by 2 degrees at a uniform speed within 1 second.

In the process of gradually increasing the additional pitch angle value or after the additional pitch angle value reaches the preset additional angle value, if the clearance interval corresponding to the clearance obtained in real time changes from the second clearance interval to a third clearance interval, a current additional pitch angle value is maintained invariant. At this time, it indicates that the clearance has been already in a safe clearance range by the above adjustment of the additional pitch angle.

Herein, maintaining the current additional pitch angle value invariant refers to maintaining an additional pitch angle value of a previous calculation period invariant. Namely, when the clearance interval corresponding to the clearance changes from the second clearance interval to the third clearance interval, the additional pitch angle value at this time is maintained invariant.

In a case that the additional pitch angle is invariant, the change of the clearance mainly depends on the change of a current wind speed. If the wind speed gradually decreases, the clearance may further increase. If the clearance interval corresponding to the clearance obtained in real time changes from the third clearance interval to a fourth clearance interval, it indicates that the clearance is excessively large, which may cause unnecessary loss of power generation. Therefore, the additional pitch angle value needs to be reduced to gradually decrease the clearance, and moreover, the ability of the wind turbine in absorbing the wind energy needs to be increased. Specifically, the current additional pitch angle value may be gradually decreased within a second preset time. As an example, in order to prevent the load caused by the wind energy absorption by the wind turbine from being increased too quickly in the process of reducing the pitch angle, a time length of the second preset time may be set to be greater than a time length of the first preset time, so that the additional pitch angle value is gradually decreased.

As an example, the process of gradually decreasing the additional pitch angle value may refer to decreasing the additional pitch angle value in each calculation period. In some embodiments, the additional pitch angle value may be decreased at a uniform speed in each calculation period. If the clearance interval corresponding to the clearance obtained in real time changes from the fourth clearance interval to the third clearance interval, the additional pitch angle value is continuously decreased until the second preset time expires. If the clearance interval corresponding to the clearance obtained in real time changes from the third clearance interval to the second clearance interval before the second preset time expires, the additional pitch angle value restarts to be increased gradually within the first preset time to reach the preset additional angle value.

It should be understood that in an embodiment of the present disclosure, the additional pitch angle protection function is triggered in a case that the clearance obtained in real time is within the second clearance interval. If the clearance obtained in real time is determined to be within the third clearance interval or the fourth clearance interval before the additional pitch angle protection function is triggered, no additional intervention is required since there is no additional pitch angle value, and the wind turbine may be controlled to execute a conventional control strategy at this time.

In an embodiment of the present disclosure, three thresholds for clearance protection are set, and the three thresholds include a first threshold, a second threshold and a third threshold. A clearance safety threshold for triggering shutdown of the wind turbine is determined as the first threshold, a clearance threshold for triggering the additional pitch angle protection is determined as the second threshold, and a clearance threshold for triggering a reset of the additional pitch angle protection is determined as the third threshold. The third threshold is greater than the second threshold, and the second threshold is greater than the first threshold.

Four clearance intervals, i.e., the first clearance interval, the second clearance interval, the third clearance interval and the fourth clearance interval, may be obtained based on the three thresholds set above.

Firstly, a zero value serves as a lower limit of the first clearance interval, the first threshold serves as an upper limit of the first clearance interval, and the first clearance interval is a half-closed and half-open interval. The first threshold serves as a lower limit of the second clearance interval, the second threshold serves as an upper limit of the second clearance interval, and the second clearance interval is a half-closed and half-open interval. The second threshold serves as a lower limit of the third clearance interval, the third threshold serves as an upper limit of the third clearance interval, and the third clearance interval is a half-closed and half-open interval. The third threshold serves as a lower limit of the fourth clearance interval, and the fourth clearance interval is a half-closed and half-open interval. An upper limit of the fourth clearance interval may refer to a theoretical maximum value of clearance determined according to the actual working condition of the wind turbine.

Returning to FIG. 1, in step S30, a pitch angle control value of each blade is determined according to an existing pitch angle given value and the additional pitch angle value of each blade.

Within each calculation period, the pitch angle control value of each blade is the sum of the existing pitch angle given value and the additional pitch angle value of the blade in the calculation period. The pitch angle given value may refer to an existing pitch angle given value under the conventional pitch strategy. That is, the additional pitch angle protection function according to the embodiment of the present disclosure is to add a pitch angle value on a basis of the conventional pitch strategy, so as to adjust the clearance.

In the case of gradually increasing the additional pitch angle value, the additional pitch angle value may be gradually increased from zero to the preset additional angle value. In the case of gradually decreasing the additional pitch angle value, the additional pitch angle value may be gradually decreased to zero.

In step S40, each blade is controlled to perform a pitch action based on the determined pitch angle control value, to adjust the clearance of the wind turbine.

In some embodiments, simultaneously for each blade of the wind turbine, the determined pitch angle control value is applied to the corresponding blade, to control all blades to perform a pitch action simultaneously, which can effectively avoid the risk of rotor imbalance in the existing pitch control scheme for single blade.

In some embodiments of the present disclosure, it may also be included a protection function for avoiding frequent triggering of the additional pitch angle protection function.

In order to avoid the increase of pitch fatigue caused by frequently switching between the increase and the decrease of the additional pitch angle value due to frequent triggering of the pitch control function based on the clearance, the additional pitch angle protection function will no longer be triggered within a preset time after a complete additional pitch angle protection has been completed once. Therefore, the pitch control method based on the clearance of the wind turbine according to the embodiment of the present disclosure may further include the following operations. If it is determined that a complete additional pitch angle protection has been completed once, the additional pitch angle protection function is stopped to avoid frequent triggering of this function, and timing is started. During the timing, the shutdown protection function for clearance over-limit is kept to be enabled, to ensure the safe operation of the wind turbine. When the timing has reached a preset time, the additional pitch angle protection function is re-enabled. As an example, it may be determined that the complete additional pitch angle protection has been completed once when the following condition is met: the additional pitch angle value increases from zero, and decreases to zero within the second preset time.

FIGS. 5A to 5D are schematic views showing control effects of the above pitch control method under an extreme wind shear working condition according to an embodiment of the present disclosure.

FIGS. 5A to 5D show simulation results under DLC1.5 working condition based on IEC standard. FIG. 5A shows the change of the wind speed at a rotor surface when the extreme vertical wind shear occurs, with time on abscissa and wind speed value on the ordinate. A difference in wind speed between the top of the rotor surface and the bottom of the rotor surface leads to a rapid reduction of the clearance. In FIG. 5A, the dashed line indicates the wind speed at the top of the rotor surface, and the solid line indicates the wind speed at the bottom of the rotor surface.

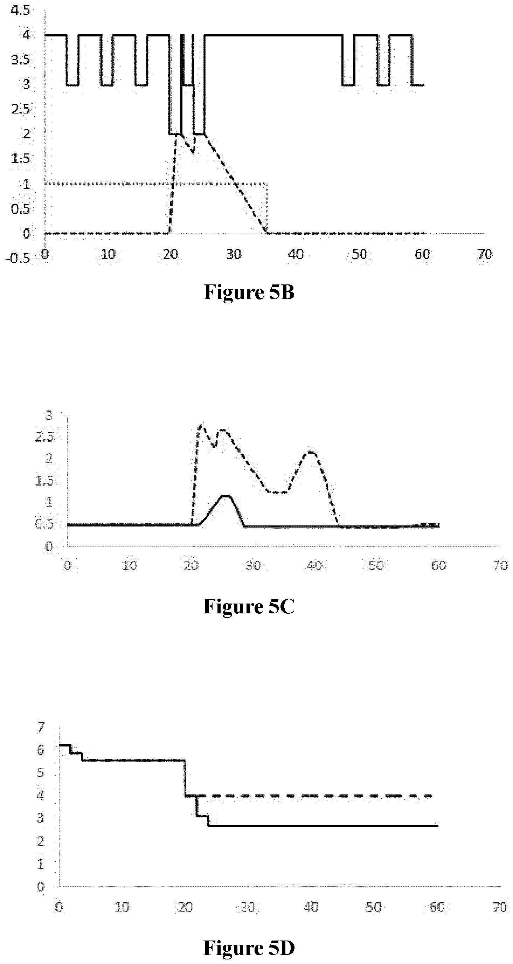

As shown in FIG. 5B, the abscissa is time, the solid line represents the clearance interval where the clearance obtained in time is located, the dashed line indicates the real-time change of the additional pitch angel value, and the dotted line indicates the change of the enable flag of the additional pitch angle protection function. It indicates that the additional pitch angle protection function is in an enabled state in a case that the enable flag is 1, and it indicates that the additional pitch angle protection function is not in the enabled state in a case that the enable flag is 0.

Taking FIG. 5B as an example, when the extreme vertical wind shear comes, if the clearance is decreased to be within the second clearance interval, the additional pitch angle value is controlled to gradually increase, so as to gradually increase the clearance; when the clearance is increased to be within the fourth clearance interval, the additional pitch angle value is controlled to gradually decrease. In the process of gradually decreasing the additional pitch angle value, if the clearance is decreased to be within the second clearance interval again, it indicates that the bad wind condition has not been over yet, the additional pitch angle value needs to be gradually increased again, until the bad wind condition is over and the clearance is in a safe state. After the complete clearance protection control cycle has been completed once, the enable flag is changed to a low level, and the additional pitch angle protection function is not allowed to be triggered again within the preset time.

As shown in FIG. 5C, the abscissa is time and the ordinate is the pitch angle value. The dashed line indicates the pitch angle value of the blade when the additional pitch angle protection function is turned on, and the solid line indicates the pitch angle value of the blade when the additional pitch angle protection function is not turned on. It can be seen from FIG. 5C that the pitch angle value of the blade when the additional pitch angle protection function is turned on is increased relative to the pitch angle value of the blade when the additional pitch angle protection function is not turned on.

As shown in FIG. 5D, the abscissa is time and the ordinate is the minimum clearance value. The dashed line indicates the minimum clearance value when the additional pitch angle protection function is turned on, and the solid line indicates the minimum clearance value when the additional pitch angle protection function is not turned on. It can be seen from FIG. 5D that the minimum clearance value when the additional pitch angle protection function is turned on is significantly boosted relative to the minimum clearance when the additional pitch angle protection function is not turned on.

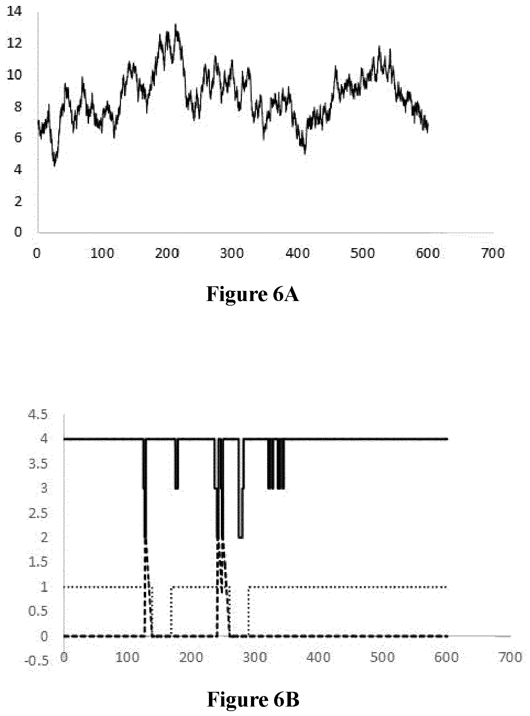

FIGS. 6A to 6E are schematic views showing control effects of the above pitch control method under a normal power generation working condition according to an embodiment of the present disclosure.

FIGS. 6A to 6E show simulation results under DLC1.2 working condition based on IEC standard. A trigger mechanism under the normal power generation working condition is the same with that under the above extreme wind shear working condition, and the pitch control method based on the embodiment of the present disclosure can boost the clearance to a certain extent.

FIG. 6A is a wind speed variation curve of normal turbulence, with time on the abscissa and wind speed value on the ordinate. As shown in FIG. 6B, the abscissa is time, the solid line represents the clearance interval where the clearance obtained in real time is located, the dashed line represents the real-time change of the additional pitch angle value, and the dotted line represents the change of the enable flag of the additional pitch angle protection function.

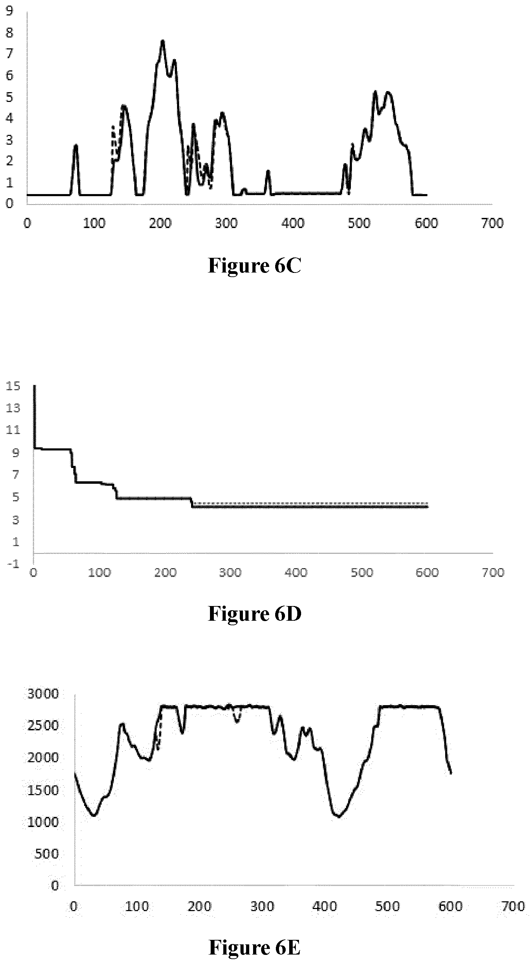

As shown in FIG. 6C, the abscissa is time and the ordinate is the pitch angle value. The dashed line indicates the pitch angle value of the blade when the additional pitch angle protection function is turned on, and the solid line indicates the pitch angle value of the blade when the additional pitch angle protection function is not turned on. It can be seen from FIG. 6C that the pitch angle value of the blade when the additional pitch angle protection function is turned on is increased relative to the pitch angle value of the blade when the additional pitch angle protection function is not turned on.

As shown in FIG. 6D, the abscissa is time and the ordinate is the minimum clearance value. The dashed line indicates the minimum clearance value when the additional pitch angle protection function is turned on, and the solid line indicates the minimum clearance value when the additional pitch angle protection function is not turned on. It can be seen from FIG. 6D that the minimum clearance value when the additional pitch angle protection function is turned on is boosted relative to the minimum clearance value when the additional pitch angle protection function is not turned on.

As shown in FIG. 6E, the abscissa is time and the ordinate is the on-grid power. It can be seen from FIG. 6E that triggering the additional pitch angle protection function under the normal power generation working condition may lead to small loss of power generation.

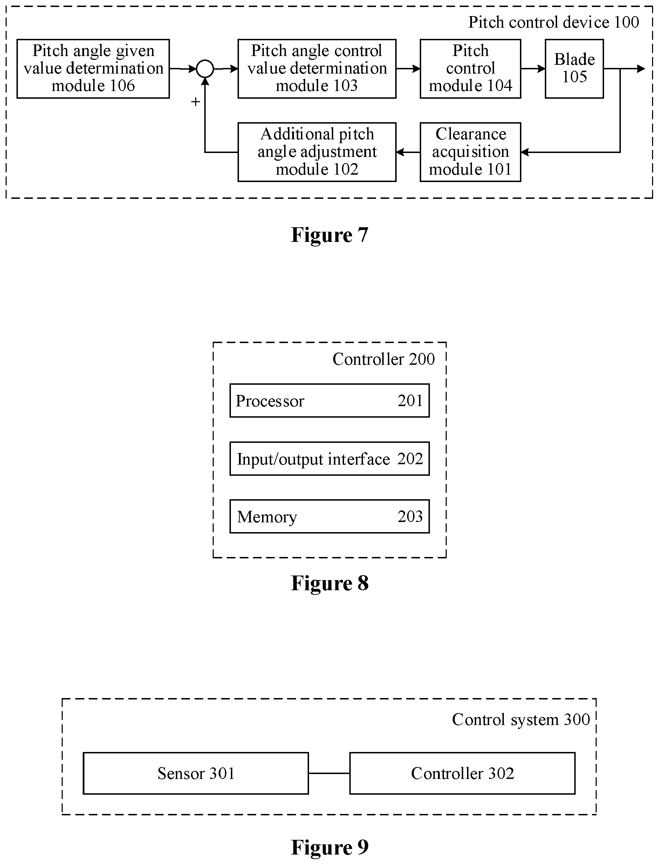

FIG. 7 is a block diagram of a pitch control device based on a clearance of a wind turbine according to an embodiment of the present disclosure.

As shown in FIG. 7, the pitch control device 100 based on the clearance of the wind turbine according to the embodiment of the present disclosure includes: a clearance acquisition module 101, an additional pitch angle adjustment module 102, a pitch angle control value determination module 103 and a pitch control module 104. The wind turbine includes at least two blades. In some embodiments, the wind turbine may include three blades.

The clearance acquisition module 101 is configured to obtain the clearance of the wind turbine in real time.

In some embodiments, the pitch control device based on the clearance of the wind turbine according to the embodiment of the present disclosure may further include: an azimuth determination module (not shown in the figure). The azimuth determination module is configured to determine a current rotor azimuth. When the rotor azimuth indicates that the blade is located within an effective azimuth range for measuring the clearance, the clearance acquisition module obtains the clearance of the wind turbine.

In some embodiments, various existing detection devices may be used to detect the clearance of the wind turbine in real time, and the clearance acquisition module 101 obtains the clearance of the wind turbine from the detection device in real time. The various detection devices may include a sensor for measuring the clearance. The pitch control device based on the clearance of the wind turbine according to the embodiment of the present disclosure may further include: a failure detection module (not shown in the figure). The failure detection module is configured to perform failure detection on the sensor. The failure detection module may determine whether the sensor fails by detecting an available state of the sensor. The available state of the sensor may be determined based on a heartbeat signal of the sensor and an algorithm accuracy flag of the sensor.

The sensor is considered to not fail when the failure detection module determines that the sensor is currently in the available state, and the clearance acquisition module 101 may obtain the clearance of the wind turbine from the sensor at this time.

The sensor is considered to fail when the failure detection module determines that the sensor is currently in an unavailable state, and data detected by the sensor is unusable at this time. The pitch control module immediately controls the wind turbine to switch to other clearance protection strategy. A signal indicating the sensor fails is reported for timely maintenance of the failed sensor.

In some embodiments, the failure detection module may further determine whether the pitch control function based on the clearance according to the embodiment of the present disclosure is enabled. The failure detection module performs failure detection on the senor when the pitch control function is in an enabled state. When the pitch control function is not in the enabled state, the failure detection module continuously determines whether the pitch control function based on the clearance is enabled. As an example, the failure detection module may determine whether the pitch control function is enabled by detecting an enable flag for indicating the pitch control function based on the clearance.

The additional pitch angle adjustment module 102 is configured to dynamically adjust an additional pitch angle value of each blade based on the clearance obtained in real time.

In some embodiments, the additional pitch angle adjustment module 102 may determine a clearance interval corresponding to the clearance obtained in real time, and dynamically adjust the additional pitch angle value of each blade based on an adjustment of the additional pitch angle corresponding to the clearance interval corresponding to the clearance.

FIG. 8 is a block diagram of a controller of a wind turbine according to an embodiment of the present disclosure.

As shown in FIG. 8, the controller 200 of the wind turbine according to the embodiment of the present disclosure includes: a processor 201, an input/output interface 202, and a memory 203.

Specifically, the memory 203 is configured to store a computer program. The computer program when executed by the processor 201 implements the pitch control method based on the clearance of the wind turbine described above. The input/output interface 202 is configured to connect various input/output devices.

As an example, the controller 200 of the wind turbine may be a main controller arranged in the wind turbine or a sub controller interacting with the main controller.

Herein, the pitch control method based on the clearance of the wind turbine shown in FIG. 1 may be performed in the processor 201 shown in FIG. 8. That is, modules shown in FIG. 7 may be implemented by a general-purpose hardware processor such as a digital signal processor or a field programmable gate array, or by a dedicated hardware processor such as a dedicated chip, or by software entirely through a computer program. For example, modules shown in FIG. 7 may be implemented as modules in the processor 201 shown in FIG. 8.

FIG. 9 is a block diagram of a control system of a wind turbine according to an embodiment of the present disclosure.

As shown in FIG. 9, the control system 300 of the wind turbine according to the embodiment of the present disclosure includes: a sensor 301 and a controller 302.

The sensor 301 is configured to detect a clearance of the wind turbine in real time. The sensor 301 herein may be any existing device that is able to detect the clearance of the wind turbine. For example, the sensor 301 may include, but is not limited to, a range sensor (such as a multi-layer laser range finder).

The controller 302 is configured to obtain the clearance of the wind turbine from the sensor 301 in real time, to perform the pitch control method based on the clearance of the wind turbine described above.

That is, the pitch control method based on the clearance of the wind turbine shown in FIG. 1 is performed in the controller 302, which will not be repeated herein.

A computer-readable storage medium storing a computer program is further provided according to an embodiment of the present disclosure. The computer-readable storage medium stores the computer program, which when executed by a processor causes the processor to perform the above pitch control method based on the clearance of the wind turbine. The computer-readable storage medium may be any data storage device that can store data read by a computer system. Examples of the computer-readable storage medium include: read only memory, random access memory, CD-ROM, magnetic tape, floppy disk, optical data storage device, and carrier wave (such as data transmissions through the Internet via a wired or wireless transmission path).

Through the pitch control method and device based on the clearance of the wind turbine according to the embodiments of the present disclosure, all blades of the wind turbine can be applied with corresponding pitch angles simultaneously, thereby reducing the risk of rotor imbalance.

In addition, the pitch control method and device based on the clearance of the wind turbine according to the embodiments of the present disclosure can realize the closed-loop feedback control based on the clearance measured in real time, and improve the clearance with more safety and effectiveness.

In addition, the pitch control method and device based on the clearance of the wind turbine according to the embodiments of the present disclosure further can reduce the loss of power generation while ensuring the clearance safety.

In addition, the pitch control method and device based on the clearance of the wind turbine according to the embodiments of the present disclosure have a short algorithm development cycle and a low calculation cost.

In summary, the clearance problem of the soft blade can be solved and the cost of the blade can be effectively reduced by using the pitch control method and device based on the clearance of the wind turbine according to the embodiments of the present disclosure.

**Claims**

1. A pitch control method based on a clearance of a wind turbine, wherein the wind turbine comprises at least two blades, and the pitch control method comprises:

   obtaining (S10) a clearance of the wind turbine in real time;
   dynamically adjusting (S20) an additional pitch angle value of each blade according to the clearance obtained in real time;
   determining (S30), for each blade, a pitch angle control value of the blade according to an existing pitch angle given value of the blade and the additional pitch angle value of the blade; and
   applying (S40), simultaneously for each blade, the determined pitch angle control value to the corresponding blade of the wind turbine to control all blades to perform a pitch action simultaneously, so as to adjust the clearance of the wind turbine;
   **characterized in that** the step of dynamically adjusting (S20) the additional pitch angle value of each blade according to the clearance obtained in real time comprises:

   determining a clearance interval corresponding to the clearance obtained in real time;
   triggering an additional pitch angle protection function and gradually increasing the additional pitch angle value within a first preset time, to reach a preset additional angle value, if the determined clearance interval is a second clearance interval; and
   in the process of gradually increasing the additional pitch angle value or after the additional pitch angle value reaches the preset additional angle value, maintaining a current additional pitch angle value invariant if the clearance interval corresponding to the clearance obtained in real time changes from the second clearance interval to a third clearance interval, and gradually decreasing the current additional pitch angle value within a second preset time, if the clearance interval corresponding to the clearance obtained in real time changes from the third clearance interval to a fourth clearance interval, wherein a time length of the second preset time is greater than a time length of the first preset time.

2. The pitch control method according to claim 1, wherein the step of dynamically adjusting the additional pitch angle value of each blade according to the determined clearance interval comprises:
   triggering a shutdown protection function for clearance over-limit and controlling the wind turbine to shut down, if the determined clearance interval is a first clearance interval.

3. The pitch control method according to claim 1, wherein the step of dynamically adjusting the additional pitch angle value of each blade comprises:

   continuously decreasing the additional pitch angle value until the second preset time expires, if the clearance interval corresponding to the clearance obtained in real time changes from the fourth clearance interval to the third clearance interval; and
   restarting to gradually increase the additional pitch angle value within the first preset time to reach the preset additional angle value, if the clearance interval corresponding to the clearance obtained in real time changes from the third clearance interval to the second clearance interval before the second preset time expires.

4. The pitch control method according to claim 1, wherein the first clearance interval, the second clearance interval, the third clearance interval and the fourth clearance interval are determined in the following ways:

   a clearance safety threshold for triggering shutdown of the wind turbine is determined as a first threshold,
   a clearance threshold for triggering an additional pitch angle protection is determined as a second threshold, and
   a clearance threshold for triggering a reset of the additional pitch angle protection is determined as a third threshold,
   wherein, a zero value serves as a lower limit of the first clearance interval, and the first threshold serves as an upper limit of the first clearance interval,
   the first threshold serves as a lower limit of the second clearance interval, and the second threshold serves as an upper limit of the second clearance interval,
   the second threshold serves as a lower limit of the third clearance interval, and the third threshold serves as an upper limit of the third clearance interval, and
   the third threshold serves as a lower limit of the fourth clearance interval, and an upper limit of the fourth clearance interval is a theoretical maximum value of clearance.

5. The pitch control method according to claim 1, further comprising:

> stopping the additional pitch angle protection function and starting timing, if it is determined that a complete additional pitch angle protection has been completed once,
> keeping enabling the shutdown protection function for clearance over-limit during the timing, and re-enabling the additional pitch angle protection function when the timing reaches a third preset time,
> wherein it is determined that the complete additional pitch angle protection has been completed once if the following condition is met:
> the additional pitch angle value increases from zero, and decreases to zero within the second preset time.

6. The pitch control method according to claim 1, wherein
in each calculation period, the pitch angle control value of each blade is a sum of the existing pitch angle given value and the additional pitch angle value in the calculation period.

7. The pitch control method according to claim 1, wherein the step of obtaining a clearance of the wind turbine in real time comprises:

> performing failure detection on a sensor for detecting the clearance of the wind turbine, wherein it is determined whether the sensor fails by detecting a heartbeat signal and an algorithm accuracy flag of the sensor;
> obtaining the clearance of the wind turbine from the sensor in real time, if it is determined that the sensor does not fail; and
> controlling the wind turbine to switch to an existing conventional clearance protection strategy, if it is determined that the sensor fails.

8. The pitch control method according to claim 1, further comprising:

> determining a current rotor azimuth,
> wherein the clearance of the wind turbine is obtained in a case that the rotor azimuth indicates that the blade is located within an effective azimuth range for measuring the clearance.

9. A pitch control device based on a clearance of a wind turbine, wherein the wind turbine comprises at least two blades, and the pitch control device comprises:

> a clearance acquisition module (101), configured to obtain a clearance of the wind turbine in real time;
> an additional pitch angle adjustment module (102), configured to dynamically adjust an additional pitch angle value of each blade according to the clearance obtained in real time;
> a pitch angle control value determination module (103), configured to determine, for each blade, a pitch angle control value of the blade according to an existing pitch angle given value of the blade and the additional pitch angle value of the blade; and
> a pitch control module (104), configured to apply, simultaneously for each blade, the determined pitch angle control value to the corresponding blade of the wind turbine to control all blades to perform a pitch action simultaneously, so as to adjust the clearance of the wind turbine, **characterized in that** the additional pitch angle adjustment module is further configured to:
>
>> determine a clearance interval corresponding to the clearance obtained in real time;
>> trigger an additional pitch angle protection function and gradually increase the additional pitch angle value within a first preset time, to reach a preset additional angle value, if the determined clearance interval is a second clearance interval; and
>> in the process of gradually increasing the additional pitch angle value or after the additional pitch angle value reaches the preset additional angle value, maintain a current additional pitch angle value invariant if the clearance interval corresponding to the clearance obtained in real time changes from the second clearance interval to a third clearance interval, and gradually decrease the current additional pitch angle value within a second preset time, if the clearance interval corresponding to the clearance obtained in real time changes from the third clearance interval to a fourth clearance interval, wherein a time length of the second preset time is greater than a time length of the first preset time.

10. A computer-readable storage medium storing a computer program, wherein the computer program when executed by a processor implements the pitch control method based on the clearance of the wind turbine according to any one of claims 1 to 8.

11. A controller of a wind turbine, comprising:

a processor;
an input/output interface; and
a memory for storing a computer program, wherein the computer program when executed by the processor implements the pitch control method based on the clearance of the wind turbine according to any one of claims 1 to 8.

12. A control system of a wind turbine, comprising:

a sensor, configured to detect a clearance of the wind turbine in real time; and
a controller, configured to obtain the clearance of the wind turbine from the sensor in real time, to implement the pitch control method based on the clearance of the wind turbine according to any one of claims 1 to 8.


**Patentansprüche**

1. Pitchregelungsverfahren, das auf einem Spielraum einer Windkraftanlage beruht, wobei die Windkraftanlage mindestens zwei Blätter umfasst, und wobei das Pitchregelungsverfahren folgende Schritte umfasst:

Erhalten (S10) eines Spielraums der Windkraftanlage in Echtzeit;
dynamisches Anpassen (S20) eines Werts eines zusätzlichen Pitchwinkels jedes Blattes in Abhängigkeit von dem in Echtzeit erhaltenen Spielraum;
Bestimmen (S30) eines Pitchwinkelregelungswerts des Blattes in Abhängigkeit von einem vorgegebenen Wert des vorhandenen Pitchwinkels des Blattes und dem Wert des zusätzlichen Pitchwinkels des Blattes für jedes Blatt; und
Verwenden (S40) des bestimmten Pitchwinkelregelungswerts für das entsprechende Blatt der Windkraftanlage gleichzeitig für jedes Blatt, um alle Blätter derart zu regeln, dass sie gleichzeitig eine Pitch-Aktion durchführen, um den Spielraum der Windkraftanlage anzupassen;
**dadurch gekennzeichnet, dass** der Schritt des dynamischen Anpassens (S20) des Werts des zusätzlichen Pitchwinkels jedes Blattes in Abhängigkeit von dem in Echtzeit erhaltenen Spielraum folgende Schritte umfasst:

Bestimmen eines Spielraumintervalls, das dem in Echtzeit erhaltenen Spielraum entspricht;
Auslösen einer Schutzfunktion des zusätzlichen Pitchwinkels und schrittweises Erhöhen des Werts des zusätzlichen Pitchwinkels innerhalb einer ersten voreingestellten Zeit, um einen voreingestellten Wert des zusätzlichen Winkels zu erreichen, wenn das bestimmte Spielraumintervall ein zweites Spielraumintervall ist; und
in dem Prozess des schrittweise Erhöhens des Wertes des zusätzlichen Pitchwinkels oder nachdem der Wert des zusätzlichen Pitchwinkels den voreingestellten Wert des zusätzlichen Winkels erreicht, unveränderlich Halten eines aktuellen Werts des zusätzlichen Pitchwinkels, wenn das Spielraumintervall, das dem in Echtzeit erhaltenen Spielraum entspricht, von dem zweiten Spielraumintervall zu einem dritten Spielraumintervall wechselt, und schrittweises Verringern des aktuellen Werts des zusätzlichen Pitchwinkels innerhalb einer zweiten voreingestellten Zeit, wenn das Spielraumintervall, das dem in Echtzeit erhaltenen Spielraum entspricht, von dem dritten Spielraumintervall zu einem vierten Spielraumintervall wechselt, wobei eine Zeitdauer der zweiten voreingestellten Zeit größer als eine Zeitdauer der ersten voreingestellten Zeit ist.

2. Pitchregelungsverfahren nach Anspruch 1, wobei der Schritt des dynamischen Anpassens des Werts des zusätzlichen Pitchwinkels jedes Blattes in Abhängigkeit von dem bestimmten Spielraumintervall folgende Schritte umfasst:
Auslösen einer Abschaltschutzfunktion für einen Spielraum über dem Grenzwert und Regeln der Windkraftanlage derart, dass sie abschaltet, wenn das bestimmte Spielraumintervall ein erstes Spielraumintervall ist.

3. Pitchregelungsverfahren nach Anspruch 1, wobei der Schritt des dynamischen Anpassens des Werts des zusätzlichen Pitchwinkels jedes Blattes folgende Schritte umfasst:

kontinuierliches Verringern des Werts des zusätzlichen Pitchwinkels bis die zweite voreingestellte Zeit abläuft, wenn das Spielraumintervall, das dem in Echtzeit erhaltenen Spielraum entspricht, von dem vierten Spielraumintervall zu dem dritten Spielraumintervall wechselt; und

erneutes Starten des schrittweisen Erhöhens des Werts des zusätzlichen Pitchwinkels innerhalb der ersten voreingestellten Zeit, um den voreingestellten Wert des zusätzlichen Winkels zu erreichen, wenn das Spielraumintervall, das dem in Echtzeit erhaltenen Spielraum entspricht, von dem dritten Spielraumintervall zu dem zweiten Spielraumintervall wechselt, bevor die zweite voreingestellte Zeit abläuft.

4. Pitchregelungsverfahren nach Anspruch 1, wobei das erste Spielraumintervall, das zweite Spielraumintervall, das dritte Spielraumintervall und das vierte Spielraumintervall auf folgende Weise bestimmt werden:

ein Spielraumsicherheitsgrenzwert zum Auslösen eines Abschaltens der Windkraftanlage wird als ein erster Grenzwert bestimmt,
ein Spielraumgrenzwert zum Auslösen eines Schutzes des zusätzlichen Pitchwinkels wird als ein zweiter Grenzwert bestimmt, und
ein Spielraumgrenzwert zum Auslösen einer Rückstellung des Schutzes des zusätzlichen Pitchwinkels wird als ein dritter Grenzwert bestimmt,
wobei ein Nullwert als eine Untergrenze des ersten Spielraumintervalls dient und der erste Grenzwert als eine Obergrenze des ersten Spielraumintervalls dient,
wobei der erste Grenzwert als eine Untergrenze des zweiten Spielraumintervalls dient und der zweite Grenzwert als eine Obergrenze des zweiten Spielraumintervalls dient,
wobei der zweite Grenzwert als eine Untergrenze des dritten Spielraumintervalls dient und der dritte Grenzwert als eine Obergrenze des dritten Spielraumintervalls dient, und
wobei der dritte Grenzwert als eine Untergrenze des vierten Spielraumintervalls dient und der vierte Grenzwert als ein theoretischer Maximalwert des Spielraums dient.

5. Pitchregelungsverfahren nach Anspruch 1, des Weiteren folgende Schritte umfassend:

Beenden der Schutzfunktion des zusätzlichen Pitchwinkels und Starten eines Timings, wenn bestimmt wird, dass ein vollständiger Schutz des zusätzlichen Pitchwinkels einmal beendigt wurde,
aktiviert Behalten der Abschaltschutzfunktion für einen Spielraum über dem Grenzwert während des Timings und wieder Aktivieren der Schutzfunktion des zusätzlichen Pitchwinkels, wenn das Timing eine dritte voreingestellte Zeit erreicht,
wobei bestimmt ist, dass der vollständige Schutz des zusätzlichen Pitchwinkels einmal beendigt wurde, wenn die folgende Bedingung erfüllt ist:
der Wert des zusätzlichen Pitchwinkels steigt von Null an und sinkt innerhalb der zweiten voreingestellten Zeit auf Null.

6. Pitchregelungsverfahren nach Anspruch 1, wobei
der Pitchwinkelregelungswert jedes Blattes in jedem Berechnungszeitraum eine Summe aus dem vorgegebenen Wert des vorhandenen Pitchwinkels und dem Wert des zusätzlichen Pitchwinkels in dem Berechnungszeitraum ist.

7. Pitchregelungsverfahren nach Anspruch 1, wobei der Schritt des Erhaltens eines Spielraums der Windkraftanlage in Echtzeit folgende Schritte umfasst:

Durchführen einer Fehlerdetektion an einem Sensor zum Erkennen des Spielraums der Windkraftanlage, wobei bestimmt wird, ob der Sensor ausfällt, indem ein Heartbeat-Signal und ein Algorithmusgenauigkeitsflag des Sensors detektiert wird;
Erhalten des Spielraums der Windkraftanlage von dem Sensor in Echtzeit, wenn bestimmt wird, dass der Sensor nicht ausfällt; und
Regeln der Windkraftanlage derart, dass sie auf eine vorhandene konventionelle Spielraumschutzstrategie umschaltet, wenn bestimmt wird, dass der Sensor ausfällt.

8. Pitchregelungsverfahren nach Anspruch 1, des Weiteren folgenden Schritt umfassend:

Bestimmen eines aktuellen Rotorazimuts,
wobei der Spielraum der Windkraftanlage in einem Fall erhalten wird, in dem der Rotorazimut anzeigt, dass sich das Blatt innerhalb eines effektiven Azimutbereichs zum Messen des Spielraums befindet.

9. Pitchregelungsvorrichtung, die auf einem Spielraum einer Windkraftanlage beruht, wobei die Windkraftanlage mindestens zwei Blätter umfasst, und wobei die Pitchregelungsvorrichtung Folgendes umfasst:

ein Spielraumerfassungsmodul (101), das dazu ausgebildet ist einen Spielraum der Windkraftanlage in Echtzeit zu erhalten;

ein Modul zum Anpassen des zusätzlichen Pitchwinkels (102), das dazu ausgebildet ist, einen Wert des zusätzlichen Pitchwinkels jedes Blattes in Abhängigkeit von dem in Echtzeit erhaltenen Spielraum dynamisch anzupassen;

ein Pitchwinkelregelungswertbestimmungsmodul (103), das dazu ausgebildet ist einen Pitchwinkelregelungswert des Blattes in Abhängigkeit von einem vorgegebenen Wert des vorhandenen Pitchwinkels des Blattes und dem Wert des zusätzlichen Pitchwinkels des Blattes für jedes Blatt zu bestimmen; und

ein Pitchregelungsmodul (104), das dazu ausgebildet ist den bestimmten Pitchwinkelregelungswert für das entsprechende Blatt der Windkraftanlage gleichzeitig für jedes Blatt zu verwenden, um alle Blätter derart zu regeln, dass sie gleichzeitig eine Pitch-Aktion durchführen, um den Spielraum der Windkraftanlage anzupassen; **dadurch gekennzeichnet, dass** das Modul zum Anpassen des zusätzlichen Pitchwinkels des Weiteren dazu ausgebildet ist,

ein Spielraumintervall, das dem in Echtzeit erhaltenen Spielraum entspricht, zu bestimmen;

eine Schutzfunktion des zusätzlichen Pitchwinkels auszulösen und den Wert des zusätzlichen Pitchwinkels innerhalb einer ersten voreingestellten Zeit schrittweise zu erhöhen, um einen voreingestellten Wert des zusätzlichen Winkels zu erreichen, wenn das bestimmte Spielraumintervall ein zweites Spielraumintervall ist; und

in dem Prozess des schrittweise Erhöhens des Wertes des zusätzlichen Pitchwinkels oder nachdem der Wert des zusätzlichen Pitchwinkels den voreingestellten Wert des zusätzlichen Winkels erreicht, einen aktuellen Wert des zusätzlichen Pitchwinkels unveränderlich zu halten, wenn das Spielraumintervall, das dem in Echtzeit erhaltenen Spielraum entspricht, von dem zweiten Spielraumintervall zu einem dritten Spielraumintervall wechselt, und den aktuellen Wert des zusätzlichen Pitchwinkels innerhalb einer zweiten voreingestellten Zeit schrittweise zu verringern, wenn das Spielraumintervall, das dem in Echtzeit erhaltenen Spielraum entspricht, von dem dritten Spielraumintervall zu einem vierten Spielraumintervall wechselt, wobei eine Zeitdauer der zweiten voreingestellten Zeit größer als eine Zeitdauer der ersten voreingestellten Zeit ist.

10. Computerlesbares Speichermedium, das ein Computerprogramm speichert, wobei das Computerprogramm, wenn es von einem Prozessor ausgeführt wird, das Pitchregelungsverfahren, das auf dem Spielraum der Windkraftanlage beruht, nach einem der Ansprüche 1 bis 8 durchführt.

11. Regler einer Windkraftanlage, wobei der Regler Folgendes umfasst:

einen Prozessor;

eine Ein-/Ausgabeschnittstelle; und

einen Speicher zum Speichern eines Computerprogramms, wobei das Computerprogramm, wenn es von dem Prozessor ausgeführt wird, das Pitchregelungsverfahren, das auf dem Spielraum der Windkraftanlage beruht, nach einem der Ansprüche 1 bis 8 durchführt.

12. Regelungssystem einer Windkraftanlage, wobei das Regelungssystem Folgendes umfasst:

einen Sensor, der dazu ausgebildet ist, einen Spielraum der Windkraftanlage in Echtzeit zu detektieren; und

einen Regler, der dazu ausgebildet ist, den Spielraum der Windkraftanlage von dem Sensor in Echtzeit zu erhalten, um das Pitchregelungsverfahren, das auf dem Spielraum der Windkraftanlage beruht, nach einem der Ansprüche 1 bis 8 durchzuführen.

**Revendications**

1. Procédé de contrôle du pas sur la base d'un jeu d'une éolienne, l'éolienne comprenant au moins deux pales, et le procédé de contrôle du pas comprenant les étapes suivantes :

obtenir (S10) un jeu de l'éolienne en temps réel ;

ajuster dynamiquement (S20) une valeur d'un angle de pas additionnel de chaque pale en fonction du jeu obtenu en temps réel ;

déterminer (S30) une valeur de contrôle de l'angle de pas de la pale en fonction d'une valeur donnée de l'angle de pas existant de la pale et de la valeur de l'angle de pas additionnel de la pale pour chaque pale ; et

appliquer (S40) la valeur de contrôle déterminée de l'angle de pas à la pale correspondante de l'éolienne simultanément pour chaque pale pour contrôler toutes les pales de manière à ce qu'elles effectuent une action de pas simultanément afin d'ajuster le jeu de l'éolienne ;

**caractérisé en ce que** l'étape consistant à ajuster dynamiquement (S20) la valeur de l'angle de pas additionnel de chaque pale en fonction du jeu obtenu en temps réel comprend les étapes suivantes :

déterminer un intervalle de jeu qui correspond au jeu obtenu en temps réel ;

déclencher une fonction de protection de l'angle de pas additionnel et augmenter graduellement la valeur de l'angle de pas additionnel dans un premier temps prédéfini pour atteindre une valeur prédéfinie de l'angle additionnel, si l'intervalle de jeu déterminé est un deuxième intervalle de jeu ; et

dans le processus d'augmenter graduellement la valeur de l'angle de pas additionnel ou après que la valeur de l'angle de pas additionnel a atteint la valeur prédéfinie de l'angle additionnel, maintenir invariante une valeur actuelle de l'angle de pas additionnel, si l'intervalle de jeu qui correspond au jeu obtenu en temps réel passe du deuxième intervalle de jeu à un troisième intervalle de jeu, et diminuer graduellement la valeur actuelle de l'angle de pas additionnel dans un deuxième temps prédéfini, si l'intervalle de jeu qui correspond au jeu obtenu en temps réel passe du troisième intervalle de jeu à un quatrième intervalle de jeu, une durée du deuxième temps prédéfini étant supérieure à une durée du premier temps prédéfini.

2. Procédé de contrôle du pas selon la revendication 1, dans lequel l'étape consistant à ajuster dynamiquement la valeur de l'angle de pas additionnel de chaque pale en fonction de l'intervalle de jeu déterminé comprend les étapes suivantes :
déclencher une fonction de protection de coupure pour un jeu supérieur à la valeur limite et contrôler l'éolienne de manière à ce qu'elle se coupe, si l'intervalle de jeu déterminé est un premier intervalle de jeu.

3. Procédé de contrôle du pas selon la revendication 1, dans lequel l'étape consistant à ajuster dynamiquement la valeur de l'angle de pas additionnel de chaque pale comprend les étapes suivantes :

diminuer en continu la valeur de l'angle de pas additionnel jusqu'à l'expiration du deuxième temps prédéfini, si l'intervalle de jeu qui correspond au jeu obtenu en temps réel passe du quatrième intervalle de jeu au troisième intervalle de jeu ; et

recommencer à augmenter graduellement la valeur de l'angle de pas additionnel dans le premier temps prédéfini pour atteindre la valeur prédéfinie de l'angle additionnel, si l'intervalle de jeu qui correspond au jeu obtenu en temps réel passe du troisième intervalle de jeu au deuxième intervalle de jeu avant l'expiration du deuxième temps prédéfini.

4. Procédé de contrôle du pas selon la revendication 1, dans lequel le premier intervalle de jeu, le deuxième intervalle de jeu, le troisième intervalle de jeu et le quatrième intervalle de jeu sont déterminés de la manière suivante :

un seuil de sécurité de jeu pour déclencher une coupure de l'éolienne est déterminé comme premier seuil,

un seuil de jeu pour déclencher une protection de l'angle de pas additionnel est déterminé comme deuxième seuil, et

un seuil de jeu pour déclencher une réinitialisation de la protection de l'angle de pas additionnel est déterminé comme troisième seuil,

dans lequel une valeur zéro sert de limite inférieure du premier intervalle de jeu et le premier seuil sert de limite supérieure du premier intervalle de jeu,

dans lequel le premier seuil sert de limite inférieure du deuxième intervalle de jeu et le deuxième seuil sert de limite supérieure du deuxième intervalle de jeu,

dans lequel le deuxième seuil sert de limite inférieure du troisième intervalle de jeu et le troisième seuil sert de limite supérieure du troisième intervalle de jeu, et

dans lequel le troisième seuil sert de limite inférieure du quatrième intervalle de jeu et une limite supérieure du quatrième intervalle de jeu est une valeur maximale théorique du jeu.

5. Procédé de contrôle du pas selon la revendication 1, comprenant en outre les étapes suivantes :

arrêter la fonction de protection de l'angle de pas additionnel et commencer un minutage, s'il est déterminé qu'une protection complète de l'angle de pas additionnel a été terminée une fois,

maintenir l'activation de la fonction de protection de coupure pour un jeu supérieur à la valeur limite pendant le minutage et réactiver la fonction de protection de l'angle de pas additionnel lorsque le minutage atteint un troisième temps prédéfini,

dans lequel il est déterminé que la protection complète de l'angle de pas additionnel a été terminée une fois, si la condition suivante est satisfaite :

la valeur de l'angle de pas additionnel augmente à partir de zéro et diminue jusqu'à zéro dans le deuxième temps prédéfini.

6. Procédé de contrôle du pas selon la revendication 1, dans lequel dans chaque période de calcul, la valeur de contrôle de l'angle de pas de chaque pale est une somme de la valeur donnée de l'angle de pas existant et de la valeur de l'angle de pas additionnel dans la période de calcul.

7. Procédé de contrôle du pas selon la revendication 1, dans lequel l'étape consistant à obtenir un jeu de l'éolienne en temps réel comprend :

effectuer une détection de défaillance sur un capteur pour détecter le jeu de l'éolienne, dans lequel il est déterminé si le capteur fait défaillance en détectant un signal de battement de coeur et un drapeau de précision de l'algorithme du capteur ;

obtenir le jeu de l'éolienne du capteur en temps réel, s'il est déterminé que le capteur ne fait pas défaillance ; et contrôler l'éolienne de manière à ce qu'elle passe à une stratégie de protection conventionnelle existante du jeu, s'il est déterminé que le capteur fait défaillance.

8. Procédé de contrôle du pas selon la revendication 1, comprenant en outre l'étape suivante :

déterminer un azimut actuel du rotor,

dans lequel le jeu de l'éolienne est obtenu dans un cas dans lequel l'azimut du rotor indique que la pale est située dans une plage d'azimut efficace pour mesurer le jeu.

9. Dispositif de contrôle du pas sur la base d'un jeu d'une éolienne, l'éolienne comprenant au moins deux pales, et le dispositif de contrôle du pas comprenant :

un module (101) d'acquisition du jeu configuré pour obtenir un jeu de l'éolienne en temps réel ;

un module (102) d'ajustement de l'angle de pas additionnel configuré pour ajuster dynamiquement une valeur de l'angle de pas additionnel de chaque pale en fonction du jeu obtenu en temps réel ;

un module (103) de détermination de la valeur de contrôle de l'angle de pas configuré pour déterminer une valeur de contrôle de l'angle de pas de la pale en fonction d'une valeur donnée de l'angle de pas existant de la pale et de la valeur de l'angle de pas additionnel de la pale pour chaque pale ; et

un module (104) de contrôle du pas configuré pour appliquer la valeur de contrôle déterminée de l'angle de pas à la pale correspondante de l'éolienne simultanément pour chaque pale pour contrôler toutes les pales de manière à ce qu'elles effectuent une action de pas simultanément afin d'ajuster le jeu de l'éolienne, **caractérisé en ce que** le module d'ajustement de l'angle de pas additionnel est en outre configuré pour

déterminer un intervalle de jeu qui correspond au jeu obtenu en temps réel ;

déclencher une fonction de protection de l'angle de pas additionnel et augmenter graduellement la valeur de l'angle de pas additionnel dans un premier temps prédéfini pour atteindre une valeur prédéfinie de l'angle additionnel, si l'intervalle de jeu déterminé est un deuxième intervalle de jeu ; et

dans le processus d'augmenter graduellement la valeur de l'angle de pas additionnel ou après que la valeur de l'angle de pas additionnel a atteint la valeur prédéfinie de l'angle additionnel, maintenir invariante une valeur actuelle de l'angle de pas additionnel, si l'intervalle de jeu qui correspond au jeu obtenu en temps réel passe du deuxième intervalle de jeu à un troisième intervalle de jeu, et diminuer graduellement la valeur actuelle de l'angle de pas additionnel dans un deuxième temps prédéfini, si l'intervalle de jeu qui correspond au jeu obtenu en temps réel passe du troisième intervalle de jeu à un quatrième intervalle de jeu, une durée du deuxième temps prédéfini étant supérieure à une durée du premier temps prédéfini.

10. Support de stockage lisible par ordinateur stockant un programme d'ordinateur, dans lequel le programme d'ordinateur, lorsqu'il est exécuté par un processeur, met en oeuvre le procédé de contrôle du pas sur la base du jeu de l'éolienne selon l'une quelconque des revendications 1 à 8.

11. Contrôleur d'une éolienne, le contrôleur comprenant :

un processeur ;

une interface d'entrée/sortie ; et

une mémoire pour stocker un programme d'ordinateur, dans lequel le programme d'ordinateur, lorsqu'il est exécuté par le processeur, met en oeuvre le procédé de contrôle du pas sur la base du jeu de l'éolienne selon l'une quelconque des revendications 1 à 8.

12. Système de contrôle d'une éolienne, le système de contrôle comprenant :

un capteur configuré pour détecter un jeu de l'éolienne en temps réel ; et

un contrôleur configuré pour obtenir le jeu de l'éolienne d'un capteur en temps réel pour mettre en oeuvre le procédé de contrôle du pas sur la base du jeu de l'éolienne selon l'une quelconque des revendications 1 à 8.

Start

S10

Obtain a clearance of the wind turbine in real time

S20

Dynamically adjust an additional pitch angle value of each blade according to the clearance obtained in real time

S30

Determine a pitch angle control value of each blade according to a pitch angle given value of each blade and the additional pitch angle value of each blade

S40

Apply, simultaneously for each blade, the pitch angle control value to the corresponding blade, to control all blades to perform a pitch action simultaneously

End

**Figure 1**

Figure 2

Figure 3A          Figure 3B          Figure 3C

```
                    ┌─────────┐
                    │  Start  │
                    └────┬────┘
                         │           ╱ S201
                         ▼
    ┌────────────────────────────────────────────────────┐
    │  Determine a clearance interval corresponding to    │
    │  the clearance obtained in real time                │
    └────────────────────────┬───────────────────────────┘
                             │            ╱ S202
                             ▼
    ┌────────────────────────────────────────────────────┐
    │  Dynamically adjust the additional pitch angle value │
    │  of each blade according to the clearance interval   │
    └────────────────────────┬───────────────────────────┘
                             │
                             ▼
                    ┌─────────┐
                    │   End   │
                    └─────────┘
```

**Figure 4**

**Figure 5A**

**Figure 5B**

**Figure 5C**

**Figure 5D**

**Figure 6A**

**Figure 6B**

**Figure 6C**

**Figure 6D**

**Figure 6E**

Pitch control device 100

| Pitch angle given value determination module 106 | Pitch angle control value determination module 103 | Pitch control module 104 | Blade 105 |

+

Additional pitch angle adjustment module 102

Clearance acquisition module 101

**Figure 7**

Controller 200

Processor 201

Input/output interface 202

Memory 203

**Figure 8**

Control system 300

Sensor 301 — Controller 302

**Figure 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140294584 A1
- EP 2726735 B1